# EUROPÄISCHE PATENTANMELDUNG

(11) **EP 1 593 820 A1**
(43) Veröffentlichungstag der Anmeldung: **09.11.2005**
(21) Anmeldenummer: 04010526.4
(22) Anmeldetag: 04.05.2004
(51) Int. Cl.: F01K 23/06, F02G 5/02

(54) **Verfahren zur Erhöhung des Wirkungsgrades aller Wärmekraftmaschinen, dadurch gekennzeichnet, dass die erzeugte Wärmeenergie bis auf unter 100 C in mechanisch nutzbare Energie umgewandelt wird.**

(71) Anmelder: Hansen, Uwe, 25767 Albersdorf (DE)
(72) Erfinder: Hansen, Uwe, 25767 Albersdorf (DE)
(74) Vertreter: Fleck, Thomas

(57) **Zusammenfassung**

Verfahren zur Erhöhung des Wirkungsgrades aller Wärmekraftmaschinen, dadurch gekennzeichnet, dass die erzeugte Wärmeenergie bis auf unter 100°C in mechanisch nutzbare Energie umgewandelt wird. Es ist bekannt, dass durch die Verbrennung von Kohlenwasserstoff flüssiger oder gasförmiger Form oder reinem Wasserstoff eine Temperatur von über 2000°C erzeugt wird. Der entstehende Gasdruck treibt die Triebwerke, z.B. Otto, Diesel, Wankel, Turbinen oder ähnliche, an. Hierbei entstehen Wärmeverluste bis zu 75%.

Aufgabe der Erfindung ist es, die Wärmeverluste zu einem großen Teil in mechanisch nutzbare Energie umzuwandeln.

Hier dargestellt an einem Vierzylinder-Ottomotor:

Der vierte Zylinder wird vom Ansaug- und Abgaskanal getrennt, so daß ein Dreizylinder- Ottomotor mit herkömmlicher Technik verbleibt.
Im vierten Zylinder
wird die im Abgas enthaltene thermische Energie der ersten drei Zylinder
in nutzbare Energie umgewandelt.

## Beschreibung

Verfahren zur Erhöhung des Wirkungsgrades aller Wärmekraftmaschinen, dadurch gekennzeichnet, dass die erzeugte Wärmeenergie bis auf unter 100°C in mechanisch nutzbare Energie umgewandelt wird.

Stand der Technik: Durch die Verbrennung von Kohlenwasserstoff flüssiger oder gasförmiger Form oder reinem Wasserstoff wird eine Temperatur von über 2000°C erzeugt, der entstehende Gasdruck treibt das Triebwerk. z.B.( Otto, Diesel, Wankel oder ähnliche) an. Hierbei entstehen Wärmeverluste bis zu 75%. (Das blaue Buch von Aral Teil 1 Der Motor, Seite 50 bis 51) oder alle Fachzeitschriften über Motoren.

Aufgabe der Erfindung ist es, die Wärmeverluste zu einem großen Teil in mechanisch nutzbare Energie umzuwandeln.

### Hier dargestellt an einem Vierzylinder-Ottomotor:

Der vierte Zylinder wird vom Ansaug- und Abgaskanal getrennt, so daß ein Dreizylinder-Ottomotor mit herkömmlicher Technik verbleibt.
Der gesamte Kühlwasserkreislauf mit Kühler und Wasserpumpe wird entfernt.
Die Nockenwelle bekommt im Bereich des vierten Zylinders vier neue aber kleinere Nocken.
Der vierte Kolben wird mit neuen spaltlosen aus Kunststoff bestehenden Kolbenringen bestückt, dieses ist möglich und notwendig, da in diesem Zylinder keine Verbrennung stattfindet.
Der Verdichtungsraum des vierten Zylinders wird entfernt, da keine Verdichtung mehr stattfindet.
Die Ventilschächte des vierten Zylinders werden mit einer Dichtung versehen.

Dem Kältemittel wird Silikonöl beigegeben, damit die Spezialdichtungen des Kolbens und der Ventile nicht trocken laufen.
Der Auspuffkrümmer des ersten, zweiten und dritten Zylinders wird mit einem Wärmetauscher versehen.
Die Abgasanlage wird durch eine stark vereinfachte Anlage ersetzt, da das Abgas vom Wärmetauscher bis auf 100°C abgekühlt wird.
Eine vorteilhafte Ausgestaltung der Erfindung ist in Patentanspruch 2) gegeben. Die Weiterbildung nach Patentanspruch 2) ermöglicht es den Kühlwasserkreislauf unangetastet zu lassen und nur den Kühler durch einen Wärmetauscher zu ersetzen. Die normalerweise an den Fahrtwind abgegebene Wärme kann in nutzbare Energie umgewandelt werden.

### Wirkungsweise:

### Hier dargestellt an einem 4 Zylindermotor.

Der Motor mit den verbliebenen drei Zylindern wird normal gestartet, die entstehende Wärme im Motorgehäuse und im Zylinderkopf wird durch Zufuhrung eines Flüssiggases durch einen geschlossenen Kreislauf auf die gewünschte Temperatur mittels eines Thermostaten von etwa 100°C gehalten, wobei ein Gasdruck von 20 bis 30 bar erreicht wird, welches in einem kleinen Druckbehälter geleitet wird. Dieser Druckbehälter ist mit dem Abgaskanal im Zylinderkopf des vierten Zylinders verbunden. Hier wird bei OT des vierten Zylinders das Ventil über die geänderte Nockenwelle geöffnet und der Kolben mit einem Druck von 20 bis 30 bar beaufschlagt. Bei UT öffnet das andere Ventil und das Gas wird durch den Kolben ausgestoßen und einem Kühler zugeführt, wo es sich verflüssigt. Eine Pumpe fördert das Flüssiggas durch thermisch gesteuerte Ventile an die zu kühlenden Orte.
Der oben beschriebene Wärmetauscher im Abgaskrümmer wird ebenfalls mit Flüssiggas auf eine Temperatur von etwa 100°C gekühlt, das hierbei entstehende Druckgas wird ebenfalls dem vierten Zylinder zugeführt.

Ein Überdruckventil am Druckbehälter ist mit dem Kühlkreislauf verbunden. Da der Ansaug- und Verdichtungstakt im vierten Zylinder entfällt, wird bei jedem OT des Kolbens ein Arbeitstakt hergestellt, das hat zur Folge, das dieser Vierzylindermotor fünf Arbeitstakte erzeugt.
Da der vierte Zylinder kein Kraftstoff benötigt, ergibt sich eine Einsparung von 25 %.

Der durch diese Erfindung zusätzlich erzeugte Arbeitstakt im vierten Zylinder hat eine Leistungssteigerung zur Folge.

Die mit der Erfindung erzielten Vorteile bestehen darin:
1, dass der Kraftstoffverbrauch etwa halbiert wird, bei erhöhter Leistung.
2. dass keine neue Motoren entwickelt werden müssen, sondern auf die weltweit vorhandene Motortechnik erfindungsgemäß aufgebaut werden kann.
3, dass nicht nur 4 Zylinder- Motoren, sondern alle Motoren bis zum 12 Zylinder Motor, wobei dann mehrere Zylinder erfindungsgemäß umgebaut werden können.
4. dass die mit dieser Erfindung versehenden Fahrzeuge weniger Gewicht, durch die leichtere Abgasanlage, auf die Waage bringen.
5. dass alle Gebrauchtfahrzeuge umgerüstet werden können.
6. dass jegliche Wärme ab 80°C. aufwärts in mechanische Nutzenergie umgewandelt werden kann
7. dass keine jahrelange Entwicklung notwendig ist, sondern mit dem vorhandenen technischen Wissen eine sofortige Umsetzung erfolgen kann.

## Patentansprüche

1. Verfahren zur Erhöhung des Wirkungsgrades aller Wärmekraftmaschinen,
**dadurch gekennzeichnet,**
**dass** die erzeugte Wärmeenergie bis auf unter 100°C in mechanisch nutzbare Energie umgewandelt wird.

2. Vorrichtung zur Durchführung des Verfahrens nach Anspruch 1,
**dadurch gekennzeichnet,**
**dass** über einen oder mehreren Wärmetauschern mittels einer Flüssigkeit, die bei 0°C verdampft und bei 100 °C bis 120°C einen nutzbaren Gasdruck erzeugt.

3. Verfahren zur Nutzung nach Anspruch 1.2.
**dadurch gekennzeichnet,**
**dass** der durch die Wärmeverluste herkömmlicher Wärmekrafhnaschinen, mittels Wärmetauscher erzeugte Gasdruck, in einem oder mehreren Zylindern eines Ottomotors nutzbar gemacht wird.

4. Vorrichtung zur Durchführung des Verfahrens nach Anspruch 1,3
**dadurch gekennzeichnet,**
**dass** der durch die Wärmeverluste herkömmlicher Wärmekraftmaschinen, mittels Wärmetauscher erzeugte Gasdruck, in externen Maschinen nutzbar gemacht wird.
